# EUROPÄISCHE PATENTSCHRIFT

(11) **EP 0 780 326 B1**
(45) Veröffentlichungstag und Bekanntmachung des Hinweises auf die Patenterteilung: **22.03.2000**
(21) Anmeldenummer: 96250298.5
(22) Anmeldetag: 21.12.1996
(51) Int. Cl.: B65G 47/26

(54) **Stauförderer mit mindestens einem endlos umlaufenden Fördermittel**
Accumulation conveyor with at least one endless conveyor element
Transporteur à accumulation avec au moins un moyen de transport sans fin

(30) Priorität: 21.12.1995 US 576332
(43) Veröffentlichungstag der Anmeldung: 25.06.1997
(73) Patentinhaber: MANNESMANN Aktiengesellschaft, 40213 Düsseldorf (DE)
(72) Erfinder: Schiesser, Ricardo N., S.W. Grandville, MI 49418 (US); Burrous, James C., Muskegon, MI 49445 (US)
(74) Vertreter: Meissner, Peter E., Dipl.-Ing.

(56) Entgegenhaltungen:
- DE-A- 2 505 451
- DE-A- 3 045 563
- DE-A- 3 046 154
- DE-A- 4 203 683
- GB-A- 2 187 156
- US-A- 3 951 254

## Beschreibung

Die Erfindung betrifft einen Stauförderer mit mindestens einem endlos umlaufenden Fördermittel gemäß den Oberbegriffen des Anspruchs 1.

Ein derartiger Stauförderer ist aus der DE-A-3046154 bekannt.

Im allgemeinen können Stauförderer in zwei Gruppen aufgeteilt werden, und zwar in Staurollenförderer und in Gurtstauförderer. Die Gurtstauförderer weisen in einer ersten Art mindestens einen die Förderfläche für das Fördergurt bildenden Gurt auf, der zum Anhalten und somit zum Aufstauen des Fördergutes abgesenkt wird und hierdurch das Fördergut auf in Förderrichtung des Stauförderers verlaufendenen Bremselementen zur Auflage kommt. In einer zweiten Art wird das Fördergut zum Aufstauen über die Bremselemente von der Förderoberfläche abgehoben.

In Förderanlagen ist der Einsatz von Staurollenförderern für das gezielte Aufstauen von Fördergut, insbesondere Stückgut weit verbreitet. Ein derartiger Staurollenförderer ist aus der US 5,191,967 bekannt, der eine Vielzahl von parallel zueinander, in Förderrichtung hintereinander und voneinander beabstandet angeordneten Rollen aufweist. Als Rollenantrieb werden zumeist unterhalb der Rollen angeordnete endlose Riemen oder Ketten eingesetzt, die reibschlüssig die Rollen antreiben. Gemäß dem US-Patent 4,458,809 sind die Ketten hierbei auf der den Rollen zugewandten Seite mit Elementen zur schonenden und reibschlüssigen Übertragung der Antriebskraft auf die Rollen, insbesondere aufsteckbare Gummielemente versehen. Der Rollenantrieb ist abschnittsweise über Antriebselemente von unten an die Rollen anhebbar, um den zugeordneten Staurollenbahnabschnitt anzutreiben. Für den Staubetrieb des Staurollenförderers werden die Rollenantriebe über die Antriebselemente von den Rollen zurückgezogen. Mit geeigneten Steuermitteln ausgerüstet sind derartige Staurollenförderer besonders geeignet, Fördergut in Behältern mit flachem Boden, in stabilen Kästen oder auf Paletten aufzustauen. Diese Staurollenbahnen werden hierbei derart gesteuert, daß der Druck zwischen dem aufgestauten Fördergut zumindest minimiert wird.

Derartige Staurollenförderer sind nicht für alle Einsatzfälle geeignet. Sehr leichte, kleine und unregelmäßig geformte sowie lose eingewickelte Artikel werden von den Staurollenförderern nicht zuverlässig gehandhabt. Derartige Gegenstände können zwischen den Rollen hindurchfallen oder sich dort verklemmen. Darüberhinaus werden in den geförderten Gegenständen Vibrationen hervorgerufen, da diese über die abwechselnd aufeinander folgenden Rollen und Zwischenräume gefördert werden. Der Einsatz für erschütterungsempfindliche Güter ist daher nur eingeschränkt möglich. Des weiteren arbeiten derartige Staurollenbahnen nicht immer zuverlässig, wenn diese in Förderrichtung aufwärts oder abwärts geneigt sind. Außerdem ist nicht unter allen Umständen der Staudruck ausgeschlossen, auch wenn bereits vermindert ist.

Die Gurtstauförderer haben nicht die gleichen Einschränkungen in bezug auf ihre Einsatzgebiete wie die Staurollenförderer. Derartige Gurtstauförderer weisen einen oder mehrere endlose Fördermittel auf, deren Oberfläche bzw. Oberflächen eine ebene Förderfläche bilden. Zwischen den Fördermitteln sind jeweils ein oder mehrere über Antriebselemente anhebbare Bremsflächen vorgesehen, um das Fördergut zum Aufstauen von der Förderfläche abzuheben. Zur Förderung des Förderguts werden die Bremsflächen unter die Förderflächen abgesenkt und das Fördergut somit auf das Fördermittel abgesetzt. Der Stauförderer ist entlang seiner Längsrichtung und somit in Förderrichtung in aufeinander folgende Stauabschnitte aufgeteilt, denen jeweils ein Antriebselement zugeordnet ist, um ein abschnittweises Aufstauen des Förderguts zu ermöglichen. Die durchgehende Förderoberfläche des Gurtes vermeidet Beschädigungen des geförderten Gutes und ermöglicht gleichsam den Einsatz bei Förderern mit ansteigender oder abfallender Förderfläche. Des weiteren wird auch der Staudruck zwischen den Fördergutteilen vermieden, da das Fördergut sich jeweils in Reibschluß mit der Bremsfläche oder der Förderfläche befinden.

Aus dem US-Patent 3,934,707 ist ein derartiger Gurtstauförderer bekannt, dessen Antriebselemente für die Bremsflächen als aufblasbare und schlauchförmige Elemente ausgebildet sind, die sich in Förderrichtung und unterhalb der Bremsflächen erstrecken. Zur Bildung der Stauabschnitte sind vielzählige Gruppen von nebeneinander angeordneten Bremsflächen mit den schlauchförmigen Elementen in Förderrichtung hintereinander angeordnet. Zur Gewährleistung einer zuverlässigen Funktion sind die schlauchförmigen Elemente mit einem pneumatischen Steuersystem für jeden Abschnitt verbunden und mechanische Führungen für die Hub- und Senkbewegung der Bremsflächen vorgesehen.

Es erweist sich als nachteilig, daß das Fördergut mit dem Anfang der zum Aufstauen angehobenen Bremsfläche des nachfolgenden Stauabschnittes kollidieren kann, wenn das Fördergut durch eine Störung in dem vorhergehenden Abschnitt nicht angehalten wurde. Eine derartige Kollision führt nicht nur dazu, daß das Fördergut beschädigt wird, sondern kann auch zur Folge haben, daß der Stauförderer blockiert wird und somit der Betrieb des gesamten Fördersystems unterbrochen werden muß. Außerdem kann es dazu kommen, daß nach Absenkung der Förderflächen und Anhalten des Förderguts auf den Bremsflächen sich Teile des Gurtes an dem Boden des aufgestauten Förderguts reiben und somit Streifen hinterlassen oder das Fördergut in einer anderen Weise verunzieren.

Der vorliegenden Erfindung liegt die Aufgabe zugrunde, einen Stauförderer mit mindestens einem endlos umlaufenden Fördermittel zu schaffen, der eine schonende Förderung des Förderguts ermöglicht.

Diese Aufgabe wird bei einem Stauförderer mit mindestens einem endlos umlaufenden Fördermittel durch die im Anspruch 1 aufgeführten Merkmale gelöst. Vorteilhafte Ausgestaltungen der Erfindungen sind in den Unteransprüchen 2 bis 13 angegeben.

Die vorliegende Erfindung stellt einen Gurtstauförderer zur Verfügung mit dem Fördergut über einen weiten Bereich von Gegenstandsgrößen, -formen und -verpackungsarten zu fördern, ohne diese zu beflecken, verschrammen, abzureiben, zusammenzudrücken, beschmieren oder in einer anderen Weise zu entstellen sowie nicht die Ecken des Förderguts in Form von Eselsohren umzuknicken. Der vorliegende Gurtstauförderer ist vorteilhafterweise auch einsetzbar, wenn die Förderebene bis zu 10° oder mehr ansteigt oder abfällt.

Erfindungsgemäß wird durch die Bewegbarkeit der aneinander angrenzenden Längsträger der jeweiligen Stauabschnitte nach Art einer Gliederkette über Antriebselemente erreicht, daß das aufzustauende Fördergut besonders schonend angehalten und weiterbefördert wird, da durch die Verbindung der Enden der Längsträger nach Art einer Gliederkette die auf den Längsträgern angeordneten Bremsflächen im Bereich der Übergänge zwischen den einzelnen Stauabschnitten gemeinsam angehoben werden und somit keine über die Förderfläche hinausragenden Kanten der Bremsflächen vorhanden sind, an denen das Fördergut beschädigt werden kann. Auch wird vermieden, daß durch auf hervorstehende Bremsflächen auffahrendes Fördergut der Stauförderer in dessen Funktion beeinträchtigt. Darüber hinaus erweist sich als vorteilhaft, die Bremsflächen zum Anhalten des Fördergutes derart anzuheben, daß sie eine in Förderrichtung ansteigende schiefe Ebene bilden, auf die das Fördergut für den Stauvorgang sanft aufrutschen kann. Anschließend wird die teilweise über die Förderfläche angehobene Bremsfläche vollständig über die Förderfläche angehoben und hiermit das Fördergut von den Fördermitteln entfernt. Vorteilhafterweise wird durch die Kopplung der Längsträger über Gelenkverbindungen auch gleichzeitig mit dem Anheben des zweiten Endes des Längsträgers des im Stauzustand befindlichen Stauabschnittes auch das erste Ende des in Förderrichtung vorangehenden Stauabschnittes angehoben, so daß auch hier die Bremsfläche eine schiefe Ebene für das darauffolgend in diesem Stauabschnitt einfahrende Fördergut bildet.

Als besonders vorteilhaft hat sich zur Bildung der Gliederkette die Verbindung der jeweils aneinander angrenzenden Enden der Längsträger über eine Gelenkverbindung herausgestellt, die eine gedachte, quer und parallel zur Förderebene verlaufende Achse aufweist. Durch diese Gelenkverbindung ist es vorteilhafterweise möglich, die beiden aneinander angrenzenden Enden der Längsträger über nur ein einziges gemeinsames Antriebselement anzuheben und abzusenken. Die durch die Längsträger gebildete Gliederkette wird vorteilhafterweise in einem in Förderrichtung verlaufenden Rahmen unter Erhalt ihrer Neig- und Anhebbarkeit in Hubrichtung über eine Führung gehalten. Zusätzlich wird deren Bewegbarkeit in und gegen die Förderrichtung beschränkt, um die Bremskräfte bzw. Antriebskräfte von dem Fördergut bzw. auf das Fördergut an den Rahmen zu übertragen. Um die Antriebs- und Bremskräfte auf das Fördergut unabhängig von der Größe ihrer Aufstandsfläche optimal übertragen zu können, ist vorgesehen, daß mehrere parallel und mit Abstand zueinander verlaufende sowie angetriebene Fördermittel, vorzugsweise Gurte, vorgesehen sind, zwischen denen in jedem Stauabschnitt Bremsflächen angeordnet sind. In diesem Zusammenhang erweist es sich auch als konstruktiv besonders einfache Lösung, mehrere parallel nebeneinander verlaufende Bremsflächen eines Stauabschnittes über Quertraversen miteinander zu verbinden und hierdurch einen Bremsrahmen zu bilden, der von einem einzigen Antriebselement anhebbar und absenkbar ist.

Auch ist es möglich, das endlose Fördermittel als Kette auszubilden, die je an ihrer dem Fördergut zugewandten Oberfläche Gummielemente zur schonenden Übertragung der Antriebs- und Bremskräfte auf das Fördergut aufweist.

Als konstruktiv einfache Lösung hat sich die Ausbildung der Antriebselemente im wesentlichen aus einem als Pneumatikzylinder ausgebildeten krafterzeugenden Element und einem hiermit gelenkig verbundenen Hebel erwiesen, der um eine quer zur Förderrichtung und im wesentlich horizontal verlaufende Achse schwenkbar ist. An dem dem krafterzeugenden Element abgewandten Ende des Hebels ist ein Mitnehmerelement gelagert, das zur Übertragung der Hub- und Senkbewegung auf den Längsträger in eine in Förderrichtung und im wesentlichen horizontal verlaufende Nut eingreift, die an der Unterseite des Längsträgers angeordnet ist. Auch ist es ausreichend, daß je Stauabschnitt nur zwei Antriebselemente vorgesehen sind, die an einem Ende und quer zur Förderrichtung beabstandet an den Längsträgern angreifen und von denen nur ein Antriebselement ein krafterzeugendes Element aufweist. Der Hebel dieses Antriebselementes ist in Verlängerung seiner Achse über ein Verdrehrohr antriebsmäßig mit dem gegenüberliegendenden Hebel des weiteren Antriebselementes verbunden.

Um die Brems- und Antriebskräfte von den Längsträgern in den Rahmen einzuleiten, ist vorteilhafterweise vorgesehen, an der Unterseite der Längsträger sich nach unten erstreckende Winkelelemente vorzusehen, die sich in Förderrichtung gesehen vorne und hinten tangential an der Achse oder dem Verdrehrohr unter Beibehaltung der möglichen Vertikalbeweglichkeit des Längsträgers abstützen.

Des weiteren hat sich als vorteilhaft herausgestellt, an den einander angrenzenden Enden der Längsträger kammartige Elemente anzuordnen, die in Förderrichtung unter Beibehaltung eines seitlichen Spiels ineinandergreifen, da hierdurch erfolgreich vermieden wird, daß besonders kleine und schmale Gegenstände oder herabhängende Teile von dem Fördergut sich zwischen den Längsträgern verfangen können.

Darüber hinaus ist bekannterweise vorgesehen, daß je Stauabschnitt mindestens ein Sensor zum Erkennen des Förderguts auf der Förderfläche des jeweiligen Stauabschnittes vorgesehen ist, der mit einem Steuersastem verbunden ist, über das vorgewählt die Stauabschnitte über die Antriebselemente in den Stauzustand oder den Durchfahrtzustand geschaltet werden können.

Die Erfindung wird nachfolgend anhand von zwei in Zeichnungen dargestellten Ausführungsbeispielen näher beschrieben. Es zeigen:
- Fig. 1: eine perspektivische Ansicht eines Abschnittes einer ersten Ausführungsform des erfindungsgemäßen Stauförderers mit einem endlos umlaufenden Gurt,
- Fig. 2: eine Vorderansicht von Fig. 1,
- Fig. 3: eine Ausschnittsvergrößerung von Fig. 2 aus dem Bereich des Fördermittels,
- Fig. 4: eine schematische Ansicht eines Stauförderers gemäß Fig. 1 zur Veranschaulichung dessen Funktionsweise,
- Fig. 5: eine Seitenansicht eines Stauförderers nach der Art des Stauförderers gemäß Fig. 1,
- Fig. 6: eine perspektivische Ansicht eines Bremsrahmens von unten eines Stauförderers gemäß Fig. 5,
- Fig. 7: eine Ausschnittsvergrößerung von Fig. 5 aus dem Bereich des Antriebselements,
- Fig. 8: eine Vorderansicht von Fig. 7,
- Fig. 9: eine Ansicht zweier Längsträger vom angrenzenden Bremsrahmen,
- Fig. 10: eine Draufsicht auf Fig. 9,
- Fig. 11: eine weitere Ausführungsform einer Gelenkverbindung zweier Bremsrahmen,
- Fig. 12: eine schematische Ansicht eines Stauförderers in einer weiteren Ausführungsform zur Veranschaulichung dessen Funktionsweise.

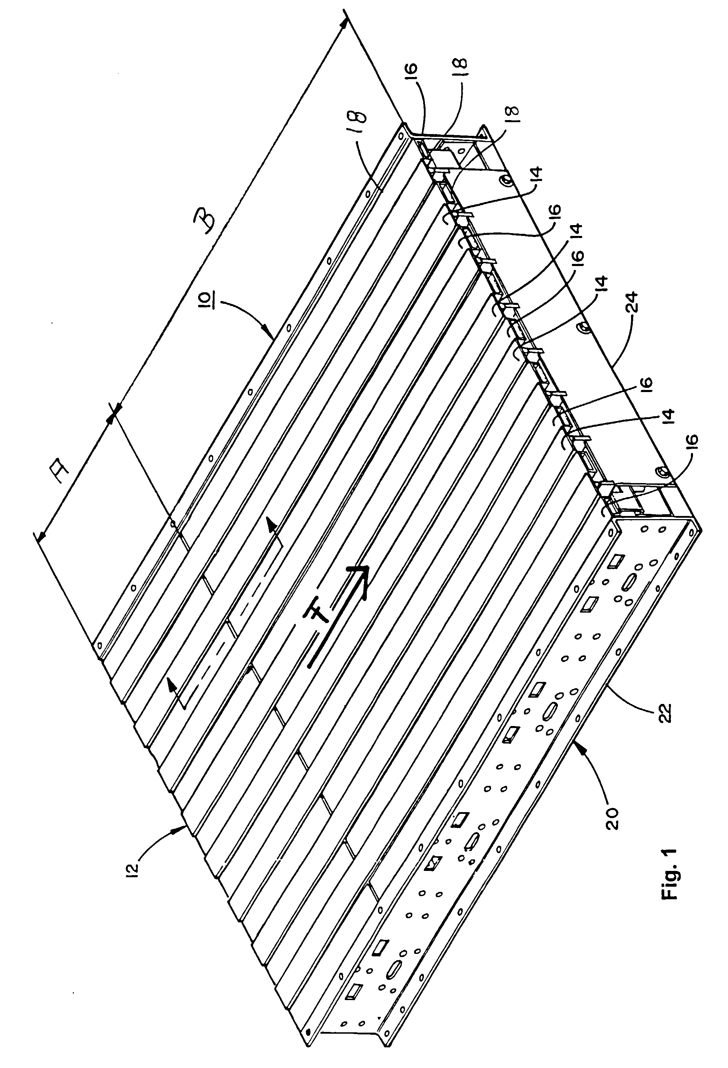

Die Figur 1 zeigt eine perspektivische Ansicht eines Abschnittes des erfindungsgemäßen Stauförderers 10 in einer ersten Ausführungsform, dessen Tragkonstruktion im wesentlichen aus einem rechteckigen Rahmen 20 mit zwei in Förderrichtung F verlaufenden und den Stauförderer 10 seitlich begrenzenden Seitenteilen 22 gebildet ist, die über mehrere in Förderrichtung F gesehen voneinander beabstandet angeordnete Querträger 24 verbunden sind und somit auf Abstand gehalten werden. Die Seitenteile 22 sind in Form von u-förmigen Blechprofilen ausgebildet, deren Steg aufrechtstehend ausgerichtet ist.

Der Stauförderer 10 weist eine Förderfläche 12 auf, die von den Oberflächen der Obertrume mehrerer parallel nebeneinander und voneinander beabstandet verlaufender Fördermitteln 14 gebildet ist. Die Fördermittel 14 sind endlos ausgebildet und jeweils um nicht dargestellte Umlenkrollen geführt, die am Anfang und am Ende des Stauförderers 10 gelagert sind. Vorzugsweise sind die endlosen Fördermittel 14 in Form eines mehrfach verstärkten Gurtes ausgebildet. Im Sinne der Erfindung ist es auch möglich als endlose Fördermittel 14 Ketten zu verwenden, an deren dem Fördergut zugewandten Seite Elemente zur schonenden Übertragung der Förderbewegung auf das Fördergut angeordnet sind, die insbesondere als aufsteckbare Gummielemente ausgebildet sind.

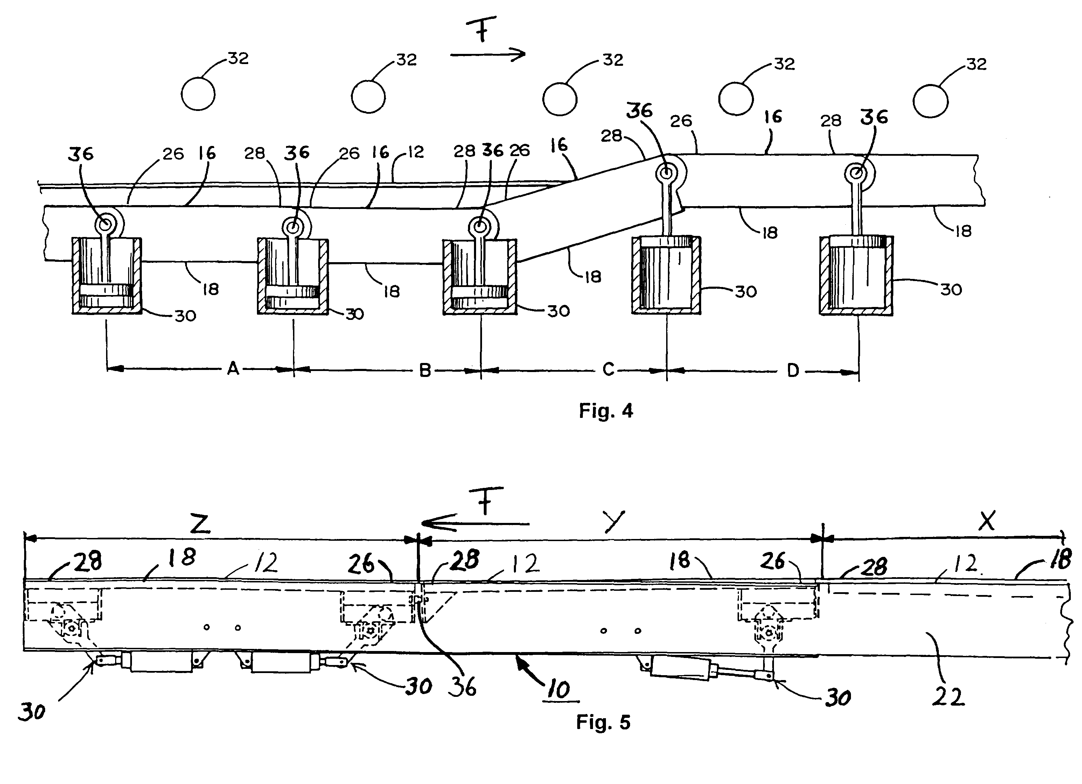

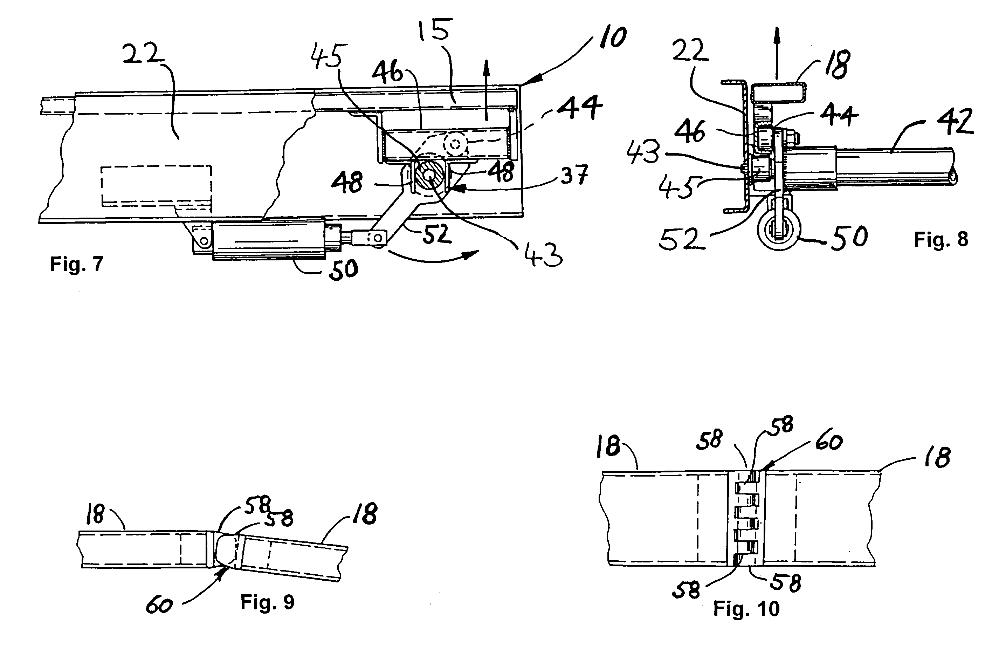

In Förderrichtung F gesehen weist der Stauförderer 10 eine Vielzahl von aufeinander folgenden Stauabschnitten für das Fördergut auf, von denen in Fig.1 ein Stauabschnitt A teilweise und ein in Förderrichtung F folgender Stauabschnitt B vollständig dargestellt ist. Für jeden Stauabschnitt sind mehrere jeweils zwischen den in Förderrichtung F verlaufenden, endlosen Fördermitteln 14 angeordnete Bremsflächen 16 zum Abheben des Fördergutes von dem Fördermitel 14 für einen Stauvorgang vorgesehen. Die Bremsflächen 16 sind als Oberflächen von Längsträgern 18 ausgebildet, die je Stauabschnitt zu einem Bremsrahmen 15 zusammengefaßt sind und hierzu die Enden der Längsträger 18 über Quertraversen 19 (s. Fig. 9) verbunden sind. Der Bremsrahmen 15 mit den Längsträgern 18 ist über Antriebselemente 30 (s. Fig. 4 und 5) aus einer Ruheposition, in der die Bremsflächen 16 sich unterhalb der Förderfläche 12 befinden und das Fördergut von dem Fördermittel 14 in Förderrichtung F transportiert wird, in eine Stauposition anhebbar, in der die Bremsflächen 16 sich oberhalb der Förderfläche 12 befinden und somit das Fördergut von der Förderfläche 12 abheben und somit anhalten können.

Obwohl das Bauteil mit der Bezugsziffer 16 als Bremsfläche bezeichnet ist, kann diese Bremsfläche hohe, geringe oder mittlere Reibungzahlen aufweisen; deren Auswahl ist abhängig von den Anforderungen des vorliegenden Einsatzfalls wie beispielsweise Fördergeschwindigkeit, Länge der Stauabschnitte und des Fördergutes sowie Oberflächenbeschaffenheit des Fördergutes. Ebenso in Abhängigkeit von dem vorliegenden Einsatzfall wird die Anzahl der nebeneinander angeordneten Fördermittel 14 und Bremsflächen 16 ausgewählt.

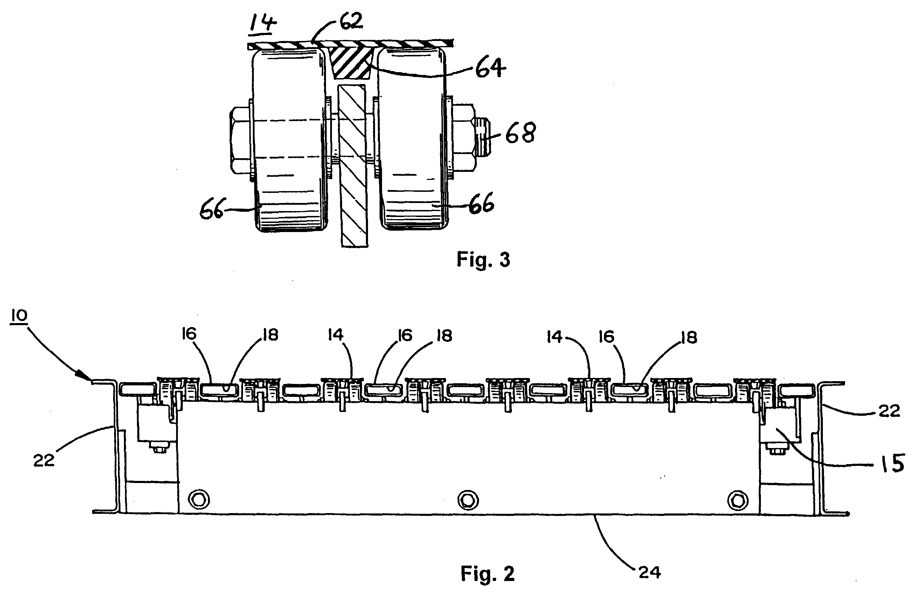

Die Figur 2 zeigt eine Vorderansicht von Fig. 1, aus der ersichtlich ist, daß eine Vielzahl von Längsträgern 18 mit ihren Bremsflächen 16 quer zur Förderrichtung F horizontal nebeneinander und mit Abstand zueinander angeordnet sind sowie auf einem gemeinsamen Bremsrahmen 15 befestigt sind. Zwischen jeweils zwei benachbarten Längsträgern 18 verläuft in Förderrichtung F ein endloses Fördermitteln 14, das über Rollen 66 (s. Fig. 3) auf dem Querträger 24 des Rahmens 20 abgestützt ist.

In der Figur 3 ist eine Ausschnittsvergrößerung von Fig. 2 aus dem Bereich des Fördermittels 14 dargestellt, das als verstärkter Flachgurt ausgebildet. Der Flachgurt weist einen gurtförmigen Tragteil 62 mit rechteckigem Querschnitt auf, an dessen sich dem Fördergut abgewandten Seite ein sich nach unten erstreckendes Führungsteil 64 mit trapezförmigen Querschnitt anschließt. Für eine reibungsarme Bewegung des Fördermittels 14 in Förderrichtung F bzw. in seine Längsrichtung sind in Förderrichtung F gesehen hintereinander und mit Abstand zueinander angeordnete Paare von Rollen 66 vorgesehen. Die Paare der Rollen 66 sind jeweils um eine vertikal verlaufende Achse 68 drehbar gelagert, die sich auf dem Querträger 24 des Rahmens 20 (s. Fig. 2) abstützt. Die Rollen 66 jedes Paares sind auf der Achse 68 mit Abstand zueinander gelagert, so daß die Rollen 66 eine Führungsnut für das Führungsteil 64 bilden und somit zur Führung des endlosen Fördermittels 14 dessen Führungsteil 64 von unten umgreifen.

Es ist auch möglich das Fördermittel 14 anstatt über Rollen 66 gleitend auf einer nicht dargestellten Führungsschiene abzutragen. Hierzu weist die als Blechprofil ausgebildete Führungsschiene zwei in Förderrichtung F und mit Abstand nebeneinander verlaufende Führungsflächen auf, die die sonst verwendeten Rollen 66 ersetzen. Die Führungsflächen dienen zur Abtragung des Tragteils 62 des Fördermittels 14 und weisen eine hier zwischen zentral angeordnete Führungsnut für das Führungsteil 64 auf. Das Tragteil 62 des Fördermittels 14 ist auf dessen dem Fördergut zugewandten Oberfläche reibungsstark und der der Führungsschiene zugewandten Oberfläche reibungsarm. Die Oberfläche des Führungsschiene ist vorzugsweise aus Stahl hergestellt oder weist eine reibungsarme Beschichtung, beispielsweise aus PTFE auf.

Anhand der Fig. 4, die eine schematische Ansicht eines Stauförderers gemäß Fig. 1 zeigt, wird nachfolgend die Funtionsweise des Stauförderers näher erläutert. In dieser Figur sind der Rahmen 20 und die Stütz- und Führungselemente (Rollen 66, siehe Fig. 3) für die Förderfläche nicht eingezeichnet worden, um das Zusammenwirken der Förderfläche 12 mit dem Längsträger 18 mit den Bremsflächen 16 klarer herausstellen zu können. Die sich jeweils in Förderrichtung F erstreckenden und die einzelnen Stauabschnitte A, B, C und D bildenden Längsträger 18 weisen jeweils ein in Förderrichtung F gesehen erstes Ende 26 und ein gegenüberliegendes zweites Ende 28 auf. Das erste Ende 26 ist jeweils über eine Gelenkverbindung 36 mit dem zweiten Ende 28 des in Förderrichtung F gesehen vorhergehenden Längsträgers 18 verbunden, wodurch die Längsträger 18 eine Art Gliederkette bilden.

Um das von dem Fördermittel 14 transportierte Fördergut für den Stauvorgang anhalten zu können, sind die Längsträger 18 mit ihren Bremsflächen 16 über das Niveau der Förderfläche 12 des Fördermittels 14 anhebbar. Für diesen Anhebevorgang des Längsträgers 18 ist jeweils für jeden Längsträger 18 ein Antriebselement 30 vorgesehen, das sich an dem Rahmen 20 (s. Fig. 1) abstützt und im Bereich der Gelenkverbindung 36 an dem zweiten Ende 28 eines jeden Längsträgers 18 angreift. Die Bewegungsrichtung des Antriebselementes 30 ist linear und im wesentlichen in Vertikalrichtung ausgerichtet. In der dargestellten Ausführungsform ist das Antriebselement 30 als mit einem Pneumatikzylinder als krafterzeugendes Mittel ausgebildet; es können jedoch auch aufblasbare Luftkissen, Hydraulikzylinder, Elektromotore, Elektromagnete oder andere krafterzeugende Elemente vorgesehen werden.

Zum Einleiten des Stauvorganges des Fördergutes, das entlang des Stauförderers 10 gefördert wird, wird gezielt das Antriebselement 30 betätigt, das sich in Förderrichtung F gesehen am Ende des jeweiligen Stauabschnittes A, B, C und D befindet, in dem das Fördergut aufgestaut werden soll. Durch das Betätigungselement 30 wird jeweils das zweite und in Förderrichtung F gesehen jeweils hintere Ende 28 des Längsträgers 18 des aktivierten Stauabschnitts sowie über die Gelenkverbindung 36 das erste und in Förderrichtung gesehen vordere Ende 26 des Längsträgers 18 des sich in Förderrichtung F anschließenden Stauabschnittes A, B, C und D angehoben. Das an dem vorderen Ende 26 über die Gelenkverbindung 36 angreifende weitere Betätigungselement 30 wird nicht betätigt, so daß zum Abbremsen des Fördergutes das vordere Ende des Bremsträgers 26 unterhalb der Förderfläche 12 des Fördermittels 14 und das hintere Ende 28 über die Förderfläche hinausragt. Diese Stellung des Längsträgers 18 ist der Fig. 4 im Stauabschnitt C zu entnehmen, in der der Längsträger 18 in Förderrichtung F gesehen aufwärts geneigt ist. Diese Aufwärtsneigung ist zur Verdeutlichung in der Fig. 4 überzeichnet dargestellt. Die geneigte Ausrichtung der Bremsfläche 16 des Längsträgers 18 für den Stauvorgang hat den Vorteil, daß das Fördergut, das in Kontakt mit der Bremsfläche 16 des Längsträgers 18 kommt, allmählich und nicht abrupt von dem Fördermittel 14 abgehoben und somit abgebremst wird.

Entlang des Stauförderers 10 sind den Stauabschnitten A, B, C und D jeweils Sensoren 32 zugeordnet, mit denen die Anwesenheit von Fördergut auf der Förderfläche 12 erkannt werden kann, um über ein nicht dargestelltes Steuersystem, beispielsweise das Betätigungselement 30 für diesen Stauabschnitt auszufahren. Das Steuersystem wertet hierfür die Signale der Sensoren der in Förderrichtung F gesehen vorhergehenden Stauplätze aus. Durch die Betätigung des Antriebselements 30 am ersten Ende 26 des Stauabschnitts wird das von der geneigten Bremsfläche 16 abgebremste Fördergut unmittelbar nach dem Bremsvorgang vollständig von der Förderfläche 12 abgehoben. Der Längsträger 18 ist dann weitestgehend horizontal entsprechend der Fig. 4, Stauabschnitt D und oberhalb der Förderfläche 12 angeordnet.

Die Sensoren 32 können in beliebiger Art ausgebildet werden. Hierunter fallen auch elektrische Fotozellen, von mechanischen Gebern betätigte Pneumatikventile, Abstandssensoren oder Lichtschranken, deren Betrieb auch im Reflektionsmodus möglich ist. Das Steuerungssystem für die gesonderte und gemeinsame Steuerung der Stauabschnitte ist als speicherprogrammierbare Steuerung ausgebildet. Die Steuerung kann alternativ auch als Pneumatiksteuerung ausgebildet sein oder auch elektro-mechanisch, elektronisch oder hydraulisch verwirklicht werden.

Für jeden Stauabschnitt A, B, C und D können mehrere Sensoren 32 vorgesehen werden, wenn das Steuerungssystem umfassendere Daten über die Position des Förderguts für den Stauvorgang benötigt. Dies ist der Fall, wenn die Teile des Förderguts sehr klein und leicht sind, diese nicht aufeinander auffahren dürfen oder mehrere Fördergutteile in einem Stauabschnitt angehalten werden sollen. Das Steuerungssystem kann ebenfalls eine Funktionsweise vorsehen, in der das Fördergut in dem Stauabschnitt A, B, C und D angehalten wird, indem der durch das Fördergut aktivierte Sensor 32 das Antriebselement 30 dieses Stauplatzes auslöst.

Das Fördergut wird solange im Stauzustand gehalten, bis deren Abzug aktiviert wird, indem das Steuerungssystem zum Anfahren des angehaltenen Förderguts die Bremsflächen 16 der Längsträger 18 der Stauabschnitte D und C unterhalb die Förderfläche 12 des Fördermittels 14 absenkt. Dieser Abzugszustand kann für jeden Stauabschnitt einzeln sowie für mehrere Abschnitte zusammen erfolgen, so daß das Fördergut nacheinander oder in einem Block wieder angetrieben wird.

Für den Fall, daß das Fördergut ohne anzuhalten durch die Stauabschnitte A, B, C und D hindurchfahren soll, sind die Antriebselemente 30 nicht im Betrieb, d.h. die Pneumatikzylinder sind nicht ausgefahren.

Die Fig. 5 zeigt eine Seitensicht eines Abschnitts eines Stauförderers 10 in einer bevorzugten Ausführungsform nach Art des Stauförderers gemäß Fig. 1. Der dargestellte Abschnitt des Stauförderers 10 weist drei in Förderrichtung F aufeinanderfolgende Stauabschnitte X, Y und Z auf, von denen die Stauabschnitte X und Y weitestgehend mit denen zuvor unter Fig. 4 beschriebenen übereinstimmen. Es ist ersichtlich, daß die Längsträger 18 des Stauabschnitts Y mit ihren Bremsflächen 16, die über ein Antriebselement 30 an ihrem ersten und in Förderrichtung F gesehen vorderen Ende des Längsträgers 18 über die Förderoberfläche 12 mit seiner Bremsfläche 16 anhebbar sind. In der vorliegenden Seitenansicht sind die Bremsflächen 16 zumindest teilweise hinter den Seitenteilen 22 des Stauförderers 10 angeordnet. An seinem vorderen Ende 26 ist dieser Längsträger 18 über eine nicht dargestellte Gelenkverbindung 36 mit dem zweiten und in Förderrichtung F gesehen hinteren Ende 28 des Längsträgers 18 des Stauabschnittes X verbunden, um dieses Ende 28 gemeinsam mit dem Längsträger 18 des Stauabschnittes Y anheben bzw. absenken zu können.

Der Stauabschnitt Z ist als sog. Entladeabschnitt ausgebildet, d.h. dieser Stauabschnitt Z bildet das Ende der kettenartig über die Gelenkverbindungen 36 miteinander verbundenen Längsträger 18 und dient zur Übergabe des Förderguts auf eine angrenzende Förderbahn. Um das in Förderrichtung F hintere zweite Ende 28 des Längsträgers 18 des Stauabschnittes Z für die Übergabe des Fördergutes an die angrenzende Förderbahn anheben zu können, ist entgegen den Längsträgern 18 der übrigen Stauabschnitte X und Y ein zweites Betätigungselement 30 vorgesehen, um auch das zweite hintere Ende 28 des Längsträgers 18 über die Förderfläche 12 anheben bzw. hierunter absenken zu können.

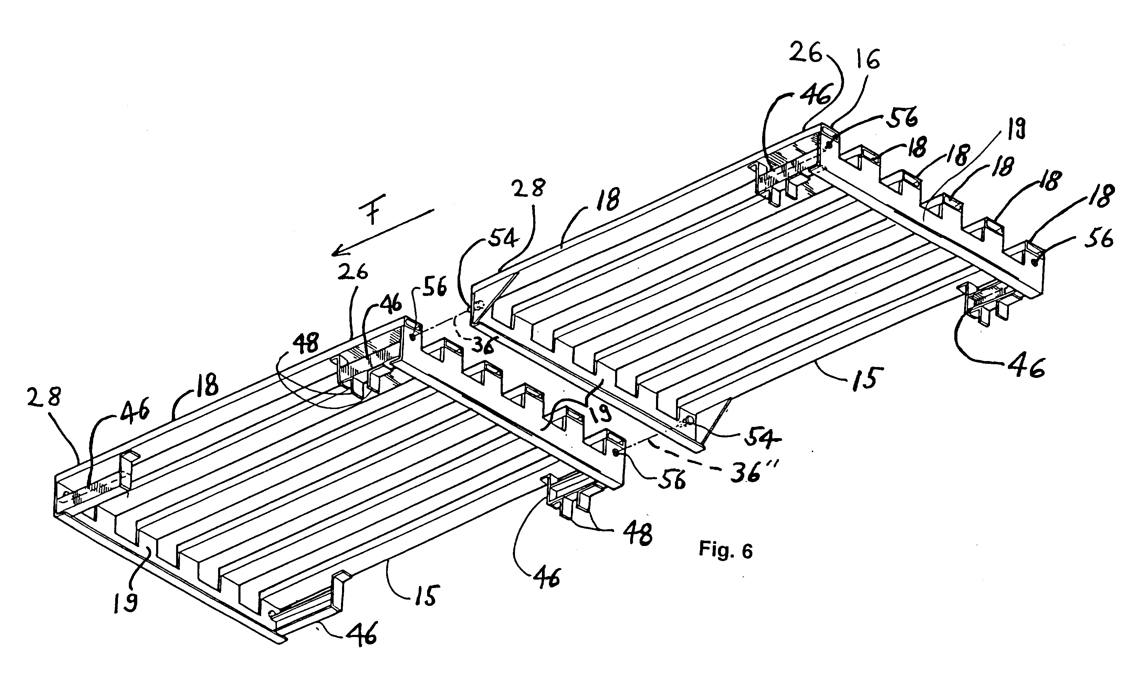

Der in der Fig. 5 nur verdeckt dargestellte und aus den Längsträgern 18 gebildete Bremsrahmen 15 ist in der Fig. 6, die eine perspektivische Ansicht eines Bremsrahmens 15 von unten zeigt, klarer zu erkennen. Es sind die Bremsrahmen 15 der Stauabschnitte Y und Z von Fig. 5 dargestellt. Jeder Bremsrahmen 15 besteht aus sechs parallel zueinander, mit Abstand voneinander sowie in Förderrichtung F verlaufenden Längsträgern 18, deren Oberflächen die Bremsflächen 16 zum Abheben des Förderguts von den Förderflächen 12 bilden. Die Längsträger 18 sind jeweils in ihren Endbereichen von unten über eine Quertraverse 19 miteinander verbunden, die als kammförmiges Blechprofil ausgebildet ist. Die aneinander angrenzenden Enden der Bremsrahmen 15, und zwar das zweite Ende 28 des Bremsrahmens 15 des Stauabschnittes Y und das erste Ende 26 des Bremsrahmens 15 des Stauabschnittes Z, sind über eine Gelenkverbindung 36 miteinander verbunden. Die Gelenkverbindung 36 ist derartig ausgebildet, daß die von dem Antriebselement 30 die im Bereich des ersten Endes 26 des Bremsrahmens 15 des Stauabschnittes Z aufgebrachte Hubkraft über die Gelenkverbindung 36 auf den angrenzenden Bremsrahmen 15 des Stauabschnitts Y übertragen werden kann. Gleichzeitig hat diese Gelenkverbindung 36 die Aufgabe, die durch das einseitige Anheben der Bremsrahmen 15 erfolgende gegenläufige Neigung des anderen Bremsrahmens 15 zu gestatten.

Hierzu ist die Gelenkverbindung 36 in einer ersten Ausführungsform als Bolzen 54 verwirklicht, der sich ausgehend von der Quertraverse 19 des Stauabschnitts Y an deren Außenseite in Förderrichtung F erstreckt und in einer Öffnung 56 der angrenzend angeordneten Quertraverse 19 des Bremsrahmens 15 des Stauabschnitts Z geführt ist. Die Abmessungen der Öffnung 56 und des Bolzens 54 sowie deren Länge sind so aufeinander abgestimmt, daß eine Übertragung der Hub- bzw. Senkbewegung des Antriebselementes 30 sicher gewährleistet ist und gleichzeitig eine Winkelbeweglichkeit der beiden Bremsrahmen 15 um eine gedachte und quer zur Förderrichtung F sowie horizontal verlaufende Achse gegeben ist. Es sind zwischen den einander angrenzenden Bremsrahmen 15 jeweils zwei derartige Gelenkverbindungen 36 vorgesehen, die quer zur Förderrichtung F gesehen an dem Bremsrahmen 15 verteilt angeordnet wird, vorzugsweise in dem seitlichen Randbereichen.

Anstelle der beschriebenen Gelenkverbindung 36 über Bolzen 54 und Öffnungen 56 können auch andere ineinandergreifende Elemente verwendet werden, solange die zuvor beschriebenen Bedingungen der Übertragung der Hub- bzw. Senkkräfte der Antriebselemente 30 und der erforderlichen Winkelbeweglichkeit der Bremsrahmen 15 erhalten bleibt.

Des weiteren ist der Figur 6 zu entnehmen, daß zur Übertragung der Hubkräfte des Antriebselements 30 auf dem Bremsrahmen 15 jeweils seitlich und im Bereich des Endes 26 unterhalb des Bremsrahmens 15 eine in Förderrichtung F verlaufende Nut 46 mit rinnenförmigem Querschnitt vorgesehen ist, deren Öffnung nach innen gerichtet ist. In die Öffnung der Nut 46 greift über ein Mitnehmerelement 44 ein Hebel 52 zur Übertragung der Hubkräfte ein (s. Fig. 7 und 8)

Eine bevorzugte Ausführungsform der Ausbildung eines Antriebselementes 30 ist in der Fig. 7 gezeigt, die eine Ausschnittsvergrößerung von Fig. 5 aus dem Bereich eines Antriebselements 30 zeigt. Dieses Antriebselement 30 besteht im wesentlichen aus einem krafterzeugenden Element 50, einem Hebel 52 und einem Mitnehmerelement 44, das in der Nut 46 des Bremsrahmens 15 geführt ist. Das krafterzeugende Element 50 ist vorzugsweise als Pneumatikzylinder ausgebildet, der gehäuseseitig über eine quer zur Förderrichtung F sowie horizontalverlaufende Achse an der Unterseite des Rahmens 22 des Stauförderers 10 befestigt ist. Der Pneumatikzylinder ist in seiner eingefahrenen Stellung, in der der Bremsrahmen 15 sich in seiner abgesenkten Ruhestellung befindet, im wesentlichen mit seiner Bewegungsrichtung in Förderrichtung F sowie parallel zu dem Seitenteil 22 angeordnet. Stangenseitig ist der Pneumatikzylinder über eine weitere quer zur Förderrichtung F sowie horizontalverlaufende Achse mit einem Ende des doppelarmigen Hebels 52 verbunden. Der Hebel 52 ist in seiner Mitte um eine quer zur Förderrichtung F sowie horizontalverlaufende Achse 43 gelagert, die an dem dem Hebel 52 abgewandten Ende in dem Seitenteil 22 gelagert ist (s. Fig. 8). Auf der Achse 43 und zwischen dem Seitenteil 22 und dem Hebel 52 ist eine Rolle 45 drehbar gelagert. An dem dem Pneumatikzylinder abgewandten Ende des Hebels 52 ist das Mitnehmerelement 44 um eine parallel zur Achse 43 verlaufende weitere Achse drehbar gelagert. Das Mitnehmerelement 44 ist als Rolle ausgebildet und ragt in die in Förderrichtung F verlaufende Nut 46 des Bremsrahmens 15 hinein. In der abgesenkten Ruhestellung des Bremsrahmens 15, in der gleichzeitig die Stange des Pneumatikzylinders eingefahren ist, ist der längliche Hebel etwa um 45° aus der vertikalen Stellung heraus verschwenkt, so daß über eine Verschwenkung des dem Mitnehmerlement 44 abgewandten Ende des Hebels 52 über den Pneumatikzylinder in eine im wesentlichen vertikale Stellung das Mitnehmerelement 44 auf einer Kreisbahn gegen den Uhrzeigersinn nach oben bewegt wird und somit über die Begrenzungswände der Nut 46 der Bremsrahmen 15 in Vertikalrichtung angehoben wird.

Des weiteren sind an der die Nut 46 bildenden unteren Begrenzungswand zwei Winkelelemente 48 angeordnet, die einen weiteren nach unten offenen und sich quer zur Förderrichtung F sowie vertikalerstreckenden Kanal bilden, und deren freie Schenkel an die Rolle 45 angrenzen. Die Länge der freien Schenkel der Winkelelemente 48 ist so gewählt, daß auch bei angehobenem Bremsrahmen der Kontakt zu der Rolle 45 erhalten bleibt, so daß wirkungsvoll ein Verschieben des Bremsrahmens 15 in und gegen die Förderrichtung F durch die aus den Winkelelementen 48 gebildete Führung 37 gewährleistet ist.

Aus der Fig. 8, die eine Vorderansicht von Fig. 7 darstellt, ist ersichtlich, daß an der der Achse 43 abgewandten Seite des Hebels 52 sowie koaxial zu der Achse 43 ein Verdrehrohr 42 fest mit dem Hebel 52 verbunden ist, das an dem dem ersten Hebel 52 abgewandten Ende mit einem weiteren nicht dargestellten Hebel 52 verbunden ist, über den in gleicher Weise wie in den Fig. 7 und 8 dargestellt wird, die andere Seite des Bremsrahmens 15 synchron angehoben wird. Der Antrieb dieses Hebels 52 erfolgt dementsprechend nicht direkt über einen Pneumatikzylinder sondern über das Verdrehrohr 42. Obwohl in dem Ausführungsbeispiel das krafterzeugende Element 50 als Pneumatikzylinder ausgebildet ist, kann alternativ der Einsatz von elektrischen Magnetspulen oder Elektromotoren vorgesehen werden.

In den Fig. 9 und 10, die Ansichten zweier aneinandergrenzender Längsträger 18 von Bremsrahmen 15 zeigen, ist eine besondere Form der Ausgestaltung der jeweiligen Enden der Längsträger 18 zu entnehmen. Um zu vermeiden, daß dünne und kleine Gegenstände zwischen die Enden der Längsträger 18 fallen können oder sich zwischen den Enden der einander angrenzenden Längstrager 18 verklemmen können, sind jeweils an den in Förderrichtung F gesehenen Enden der Längsträger 18 kammartige Elemente 58 vorgesehen. Diese Elemente weisen jeweils mehrere sich in Förderrichtung F erstreckende fingerförmige Zinken auf, die in entsprechend ausgebildete Zinken des gegenüberliegenden Elementes 58 eingreifen. Quer zur Förderrichtung F gesehen überlappen somit die fingerförmigen Bereiche der Elemente 58, die kammartig ineinander greifen, miteinander, so daß ebenfalls quer zur Föderrichtung F gesehen kein durchgehender Spalt zwischen den Längsträgern 18 von aufeinanderfolgenden Bremsrahmen 15 besteht. Darüber hinaus ist die Länge der ineinanderragenden fingerförmigen Vorsprünge der Elemente 58 so gewählt, daß eine begrenzte Winkelbeweglichkeit der Längsträger 18 zueinander möglich ist und hierbei gleichzeitig das Überlappen der Elemente 58 erhalten bleibt. Außerdem sind die kammartigen Elemente 58 seitlich mit geringem Spiel voneinander beabstandet.

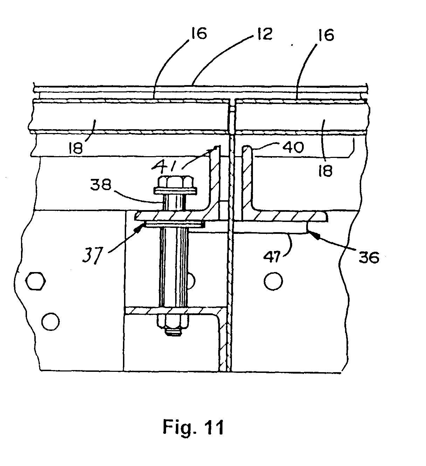

Die Fig. 11 zeigt eine weitere Ausführungsform einer Gelenkverbindung 36 zweier aneinandergrenzender Längsträger 18. Diese Gelenkverbindung 36 zeichnet sich insbesondere durch in den Endbereichen unterhalb der Längsträger 18 sowie quer zur Förderrichtung verlaufende Winkelelemente 40 und 41 auf, die zur Übertragung der Hubbewegung des einen Längsträgers 18 auf den Längsträger 18 des sich anschließenden Längsträgers 18 über eine Gelenkverbindung 36 miteinander verbunden sind.

Die Gelenkverbindung 36 besteht im wesentlichen aus einem Stützelement 47, das als Flachprofil ausgebildet ist und fest mit der Unterseite des einen Schenkels des Winkelelements 41 verbunden ist und in Förderrichtung F unter das Winkelelement 40 des benachbarten Längsträgers 18 ragt. Auf diesem herausragenden Teil des Stützelementes 47 liegt das Winkelelement 40 ohne weitere Befestigung lose auf. Hierdurch ist es möglich, daß für den Anhebe- und Absenkvorgang der Längsträger 18 diese begrenzt gegeneinander winkelbeweglich sind und gleichzeitig durch die Auflage des Winkelelements 40 auf dem Stützelement 47 die Hubkraft des an dem benachbarten Längsträgers 16 angreifenden Antriebselements 30 über das Winkelelement 41, das Stützelement 47 auf das Winkelelement 40 und somit auf den Längsträger 18 übertragen wird.

Um die höhenbewegbaren Längsträger 18 in und gegen die Förderrichtung F zu arretieren, ist der Längsträger 18 an einem Ende über eine Führung 37 gehalten. Diese Führung 37 besteht im wesentlichen aus einem vertikal verlaufenden Führungsstift 38, der durch eine Öffnung in einem Schenkel des Winkelelements 41 hindurchragt. Dieser Schenkel des Winkelelements 41 ist im wesentlichen horizontal verlaufend ausgerichtet. An dem Führungsstift 38 sind zwei Begrenzungen in Form eines Schraubenkopfes sowie von Unterlegscheiben vorgesehen, um eine Bewegbarkeit des Winkelelementes 41 und somit des Trägers 18 nur in einem begrenzten Bereich entlang des Führungsstiftes 38 zu gestatteten.

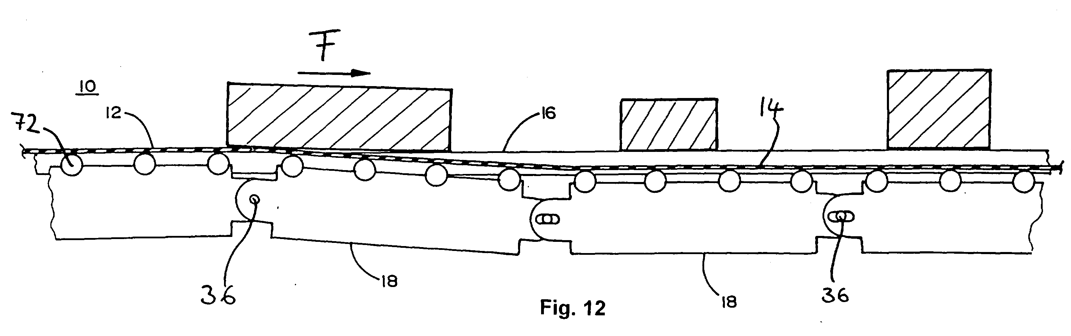

Ferner zeigt die Fig. 12 eine schematische Ansicht eines Stauförderers 10 in einer weiteren Ausführungsform, die sich im wesentlichen zu der vorgenannten Ausführungsform dadurch unterscheidet, daß zum Anhalten des Fördergutes nicht die Bremsflächen 16 angehoben werden, sondern die Förderfläche 12 des Fördermittels 14 jeweils im Stauabschnitt abgesenkt wird. Hierzu sind die Bremsflächen 16 nicht Bestandteil der Längsträger 18, sondern von ortsfesten und in Förderrichtung verlaufenden Schienen, die somit nicht höhenbeweglich sind. Die wie in den zuvor beschriebenen Ausführungsformen gelenkig miteinander verbundenen Längsträger 18, die über Gelenkverbindungen 36 zu einer Art Kette miteinander verbunden sind, dienen bei dieser Ausführungsform zum Anheben der Förderfläche 12 des Fördermittels 14 über die Oberfläche der Bremsflächen 16 bzw. zum Absenken des Fördermittels 14 hierunter. Die Gelenkverbindung 36 ist hier als Bolzenverbindung ausgeführt, wobei der Bolzen in einem Langloch des benachbarten Längsträgers 18 gehalten ist, um den erforderlichen Längenausgleich beim Anheben des Längsträgers 18 der Gliederkette zu ermöglichen. Um das Fördermittel schonend auf den Längsträgern 18 zu tragen, sind diese über Rollen 72 auf den Längsträgern 18 abgetragen. Anstatt der Rollen 72 können auch Gleitflächen vorgesehen werden.

In den dargestellten Ausführungsformen weisen die Stauförderer 10 Breiten in einem Bereich von etwa 0,46 m (18 inch), wobei vier endlose Fördermittel 14 und fünf Längsträger 18 nebeneinander je Stauabschnitt vorgesehen sind, bis zu etwa 0,9 m (36 inch) auf, wobei jeweils elf endlose Fördermittel 14 und neun Längsträger je Stauabschnitt nebeneinander angeordnet sind. In dem Durchfahrzustand des Stauförderers ragen die Förderflächen 12 der endlosen Fördermittel 14 etwa 0,006 m (1/4 inch) über die Längsträger 18 nach oben hinaus. Demgegenüber liegen im Stauzustand die Bremsflächen 16 etwa den gleichen Betrag oberhalb des endlosen Fördermittels 14. Die einzelnen Stauabschnitte sind etwa 0,9 m (3 feet) lang. Die Fördergeschwindigkeit beträgt etwa zwischen 1 m/s (200 Fuß/min.) und 1,5 m/s (300 Fuß/min.).

Obwohl die zuvor beschriebenen Ausführungsbeispiele jeweils nur mit einem Antriebselement je Stauabschnitt bzw. Bremsrahmen 15 beschrieben sind, ist es grundsätzlich auch möglich, das je Bremsrahmen an beiden Enden Antriebselemente vorgesehen werden und auf die Gelenkverbindung verzichtet wird, nicht nur über ein Antriebselement 30 sondern nur über die Gelenkverbindung angehobene Ende eines Längsträgers eines Stauabschnittes auch über ein eigenes Antriebselement anzuheben, wobei die Antriebselemente miteinander synchronisiert geschaltet werden müssen. Zwischen dem Bremsrahmen 15 wären dann Mittel vorzusehen, die den Spalt überbrücken. Des weiteren ist es möglich, andere Mittel für die Verbindung der angrenzenden Enden der Abschnitte vorzusehen.

## Patentansprüche

1. Stauförderer mit mindestens einem endlos umlaufenden Fördermittel (14), das eine obere Förderfläche (12) für den Transport von Fördergut bildet, mit mehreren in Förderrichtung (F) gesehen hintereinander und entlang des Fördermittels (14) angeordneten Stauabschnitten (A bis D, X, Y und Z) zum Anhalten des Fördergutes, die jeweils mindestens einen seitlich neben dem Fördermittel (14) und weitestgehend parallel hierzu verlaufend angeordneten Längsträger (18) mit einer Bremsfläche (16) für das Fördergut aufweisen, wobei die aneinander angrenzenden Längsträger (18) der jeweiligen Stauabschnitte (A bis D, X, Y und Z) nach Art einer Gliederkette mit ihren aneinander angrenzenden Enden (26,28) über eine Gelenkverbindung (36) miteinander verbunden sind, die Gelenkverbindung (36) eine gedachte, quer und parallel zur Förderebene (12) verlaufende Achse aufweist und die aneinander angrenzenden Enden (26,28) über ein gemeinsames Antriebselement (30) anheb- und absenkbar sind und die Längsträger (18) zum Aufstauen des Fördergutes über Antriebselemente (30) derart mit ihren Bremsflächen (16) teilweise über die Förderfläche (12) anhebbar sind, daß die Bremsflächen (16) zum Anhalten des Fördergutes in einem Stauabschnitt (A bis D, X, Y und Z) eine in Förderrichtung (F) ansteigende schiefe Ebene bilden und die Bremsflächen (16) nach Abbremsen des Förderguts an den geneigten Bremsflächen (16) vollständig über die Förderfläche (12) anhebbar sind sowie hiermit gleichzeitig die Bremsflächen (16) des in Förderrichtung (F) vorhergehenden Stauabschnitts (A bis D, X, Y und Z) zum Anhalten des Fördergutes in Förderrichtung (F) ansteigend und teilweise über die Förderfläche (12) hinausragend anhebbar sind,
dadurch gekennzeichnet,
daß der Stauförderer einen Rahmen (20) aufweist, an dem sich die Antriebselemente (30) abstützen und die Längsträger (18) der Stauabschnitte (A bis D, X, Y und Z) unter Erhalt ihrer Neig- und Anhebbarkeit in Hubrichtung über eine Führung (37) Winkelelement (48) gehalten sind sowie hierdurch deren Bewegbarkeit in und gegen die Förderrichtung (F) beschränkt ist und die Gelenkverbindung (36) derart ausgebildet ist, daß die durch die Hubbewegung der Längsträger (18) hervorgerufene relative Winkelbewegung der aneinander angrenzenden Enden (26,28) und die hiermit verbundene Abstandsänderung zwischen den Enden (26,28) unter Beibehaltung der Übertragung der Hubkräfte ausgeglichen wird.

2. Stauförderer nach Anspruch 1,
dadurch gekennzeichnet,
daß die Gelenkverbindung (36) aus an den Enden (26,28) der Längsträger (18) angeordneten und sich in Förderrichtung (F) erstreckenden Bolzen (54) bestehen, die in an den gegenüberliegenden Enden (26,28) der Längsträger (18) angeordnete Öffnungen (56) hineinragen.

3. Stauförderer nach Anspruch 1, dadurch gekennzeichnet, daß die Gelenkverbindung (36) aus einem an einem Ende (26,28) angeordneten und in Förderrichtung (F) sowie zu dem gegenüberliegenden Ende (26,28) hinausragenden Stützelement (47) besteht, auf dem der Längsträger (18) des angrenzenden Stauabschnitts (A bis D, X, Y und Z) aufliegt.

4. Stauförderer nach einem der Ansprüche 1 bis 3,
dadurch gekennzeichnet,
daß mehrere parallel und mit Abstand zueinander verlaufende sowie angetriebene Fördermittel (14) vorgesehen sind, zwischen denen in jedem Stauabschnitt (A bis D, X, Y und Z) Bremsflächen (16) angeordnet sind.

5. Stauförderer nach Anspruch 4,
dadurch gekennzeichnet,
daß mehrere Längsträger (18) mit Bremsflächen (16) über Quertraversen (19) verbunden sind und einen Bremsrahmen (15) bilden, der von einem Antriebselement (30) anheb- und absenkbar ist.

6. Stauförderer nach einem der Ansprüche 1 bis 5,
dadurch gekennzeichnet,
daß die Antriebselemente (30) jeweils über einen Pneumatikzylinder angetrieben sind.

7. Stauförderer nach einem der Ansprüche 1 bis 6,
dadurch gekennzeichnet, daß das Fördermittel (14) als Gurt ausgebildet ist.

8. Stauförderer nach einem der Ansprüche 1 bis 7,
dadurch gekennzeichnet,
daß das endlose Fördermittel (14) als Kette ausgebildet ist und an der an ihrer dem Fördergut zugewandten Oberfläche Gummielemente befestigt sind.

9. Stauförderer nach einem der Ansprüche 1 bis 8,
dadurch gekennzeichnet,
daß die Antriebselemente (30) im wesentlichen aus einem als Hubzylinder ausgebildeten krafterzeugenden Element (50), einem hiermit gelenkig verbundenen Hebel (52) gebildet ist, der um eine quer zu Förderrichtung (F) und im wesentlichen horizontal verlaufende Achse (43) schwenkbar ist und an dessen dem krafterzeugenden Element (50) abgewandten Ende ein Mitnehmerelement (44) gelagert ist, das zur Übertragung der Hub- und Senkbewegung auf den Längsträger (18) in eine in Förderrichtung (F) und im wesentlichen horizontal verlaufende Nut (46) eingreift, die an der Unterseite des Längsträgers (18) angeordnet ist.

10. Stauförderer nach Anspruch 9,
dadurch gekennzeichnet,
daß je Stauabschnitt (A bis D, X, Y und Z) zwei Antriebselemente (30) vorgesehen sind, die an einem Ende (26,28) und quer zur Förderrichtung (F) beabstandet an den Längsträgern (18) angreifen und von denen nur ein Antriebselement (30) ein krafterzeugenden Element (50) aufweist, dessen Hebel (52) in Verlängerung der Achse (43) über ein Verdrehrohr (42) antriebsmäßig mit dem gegenüberliegenden Hebel (52) des weiteren Antriebselementes (30) verbunden ist.

11. Stauförderer nach Anspruch 10,
dadurch gekennzeichnet,
daß an der Unterseite der Längsträger (18) zur Beschränkung der Bewegung des Längsträgers (18) in und gegen Förderrichtung (F) ein Paar sich nach unten erstreckender Winkelelemente (48) angeordnet ist, die jeweils tangential an dem Verdrehrohr (42) oder der Achse (43) in Förderrichtung (F) gesehen vorne oder hinten anliegen.

12. Stauförderer nach nach einem der Ansprüche 1 bis 11,
dadurch gekennzeichnet,
daß an den aneinander angrenzenden Enden (26,28) der Längsträger (18) kammartige Elemente (58) angeordnet sind, die in Förderrichtung (F) unter Beibehaltung eines seitlichen Spiels ineinandergreifen.

13. Stauförderer nach einem der Ansprüche 1 bis 12,
dadurch gekennzeichnet,
daß je Stauabschnitt (A bis D, X, Y und Z) mindestens ein Sensor (32) zum Erkennen des Förderguts auf der Förderfläche (12) des jeweiligen Stauabschnittes (A bis D, X, Y und Z) vorgesehen ist, der mit einem Steuersystem verbunden sind, über das vorgewählt die Stauabschnitte (A bis D, X, Y und Z) über die Antriebselemente (30) in den Stauzustand oder Durchfahrzustand schaltbar sind.

## Claims

1. An accumulating conveyor having at least one endlessly revolving conveying means (14) which forms an upper conveying surface (12) for transporting material being conveyed, having a plurality of accumulation sections (A to D, X, Y and Z) for stopping the material being conveyed which are arranged one behind the other along the conveying means (14), viewed in the direction of conveyance (F), each of which have at least one longitudinal bar (18), arranged laterally next to the conveying means (14) and extending very largely parallel thereto, with a braking surface (16) for the material being conveyed, wherein the adjoining longitudinal bars (18) of the respective accumulation sections (A to D, X, Y and Z) are connected together in the manner of a link chain by their adjoining ends (26, 28) by means of a hinge joint (36), the hinge joint (36) has an imaginary axis extending transversely and parallel to the conveying plane (12) and the adjoining ends (26, 28) can be raised and lowered by means of a common drive element (30) and the longitudinal bars (18), to accumulate the material being conveyed, can be raised by drive elements (30) with their braking surfaces (16) partially above the conveying plane (12), such that the braking surfaces (16), to stop the material being conveyed, in an accumulation section (A to D, X, Y and Z) form an inclined plane which ascends in the direction of conveyance (F) and the braking surfaces (16), after braking the material being conveyed on the inclined braking surfaces (16), can be raised completely above the conveying surface (12) and simultaneously therewith the braking surfaces (16) of the accumulation section (A to D, X, Y and Z) preceding them in the direction of conveyance (F), to stop the material being conveyed, can be lifted to ascend in the direction of conveyance and to project partly above the conveying surface (12),
characterised in that
the accumulating conveyor has a frame (20) on which the drive elements (30) are supported and the longitudinal bars (18) of the accumulation sections (A to D, X, Y and Z), while retaining their ability to be inclined and raised in the direction of lifting, are held by means of a guide (37)/angled element (48) and their ability to move in and counter to the direction of conveyance (F) is restricted thereby and the hinge joint (36) is designed such that the relative angular movement of the adjoining ends (26, 28) caused by the lifting movement of the longitudinal bars (18) and the change in distance between the ends (26, 28) which this involves is compensated, maintaining the transfer of the lifting forces.

2. An accumulating conveyor according to Claim 1,
characterised in that the hinge joint (36) consists of bolts (54) arranged at the ends (26, 28) of the longitudinal bars (18) and extending in the direction of conveyance (F), which bolts project into openings (56) provided on the opposing ends (26, 28) of the longitudinal bars (18).

3. An accumulating conveyor according to Claim 1,
characterised in that the hinge joint (36) consists of a supporting element (47) arranged on one end (26, 28) and projecting in the direction of conveyance (F) to the opposing end (26, 28), against which element the longitudinal bar (18) of the adjoining accumulation section (A to D, X, Y and Z) lies.

4. An accumulating conveyor according to one of Claims 1 to 3, characterised in that a plurality of driven conveying means (14) extending parallel and spaced apart from each other are provided, between which braking surfaces (16) are arranged in each accumulation section (A to D, X, Y and Z).

5. An accumulating conveyor according to Claim 4,
characterised in that a plurality of longitudinal bars (18) with braking surfaces (16) are connected by means of crossbars (19) and form a braking frame (15) which can be raised and lowered by a drive element (30).

6. An accumulating conveyor according to one of Claims 1 to 5, characterised in that the drive elements (30) are each driven via a pneumatic cylinder.

7. An accumulating conveyor according to one of Claims 1 to 6, characterised in that the conveying means (14) are in the form of a belt.

8. An accumulating conveyor according to one of Claims 1 to 7, characterised in that the endless conveying means (14) is in the form of a chain and rubber elements are fastened to its surface which faces the material being conveyed.

9. An accumulating conveyor according to one of Claims 1 to 8, characterised in that the drive elements (30) are formed substantially of a force-generating element (50) in the form of a lifting cylinder, a lever (52) articulated thereto which is pivotable about a spindle (43) extending transversely to the direction of conveyance (F) and substantially horizontally and on the end of which which is remote from the force-generating element (50) an entraining element (44) is mounted, which entraining element engages in a groove (46), located on the underside of the longitudinal bar (18), which extends in the direction of conveyance (F) and substantially horizontally for transferring the raising and lowering movement to the longitudinal bar (18).

10. An accumulating conveyor according to Claim 9,
characterised in that two drive elements (30) are provided per accumulating section (A to D, X, Y and Z) which act, spaced apart, on the longitudinal bars (18) on one end (26, 28) and transversely to the direction of conveyance (F) and of which only one drive element (30) has a force-generating element (50), the lever (52) of which in an extension of the spindle (43) is connected for driving via a torque tube (42) to the opposing lever (52) of the further drive element (30).

11. An accumulating conveyor according to Claim 10,
characterised in that a pair of downward-extending angled elements (48) is arranged on the underside of the longitudinal bars (18) to restrict the movement of the longitudinal bar (18) in and counter to the direction of conveyance (F), which elements each lie tangentially against the torque tube (42) or the spindle (43) at the front or rear when viewed in the direction of conveyance (F).

12. An accumulating conveyor according to one of Claims 1 to 11, characterised in that comb-like elements (58) are arranged on the adjoining ends (26, 28) of the longitudinal bars (18), which engage in one another in the direction of conveyance (F), while maintaining lateral play.

13. An accumulating conveyor according to one of Claims 1 to 12, characterised in that, per accumulating section (A to D, X, Y and Z), at least one sensor (32) for recognising the material being conveyed is provided on the conveying surface (12) of the respective accumulating section (A to D, X, Y and Z), which sensors are connected to a control system via which in preselected manner the accumulating sections (A to D, X, Y and Z) can be switched into the accumulation state or the through-passage state by means of the drive elements (30).

## Revendications

1. Transporteur à accumulation, comportant au moins un moyen de transport tournant sans fin (14), qui forme une surface de transport supérieure (12) pour le transport de marchandises, plusieurs tronçons d'accumulation (A à D, X, Y et Z) agencés le long du moyen de transport (14) et l'un derrière l'autre dans la direction de transport (F) pour retenir les marchandises transportées, lesquels présentent, à chaque fois, au moins un support longitudinal (18), agencé latéralement à côté du moyen de transport (14) et en s'étendant très largement parallèlement à celui-ci, avec une surface de freinage (16) pour les marchandises, les supports longitudinaux adjacents l'un à l'autre (18) des tronçons d'accumulation respectifs (A à D, X, Y et Z) étant reliés l'un à l'autre, à la manière d'une chaîne à maillons, par leurs extrémités adjacentes l'une à l'autre (26,28) par l'intermédiaire d'une liaison articulée (36), la liaison articulée (36) présentant un axe imaginaire s'étendant transversalement et parallèlement au plan de transport (12) et les extrémités adjacentes l'une à l'autre (26,28) pouvant être soulevées et abaissées par l'intermédiaire d'un élément d'entraînement commun (30), et les supports longitudinaux (18) pouvant être soulevés pour l'accumulation des marchandises par l'intermédiaire des éléments d'entraînement (30) par leurs surfaces de freinage (16), partiellement, au-dessus de la surface de transport (12), de sorte que les surfaces de freinage (16) forment, pour retenir les marchandises dans un tronçon d'accumulation (A à D, X, Y et Z), un plan incliné montant dans la direction de transport (F) et les surfaces de freinage (16), après le freinage des marchandises sur les surfaces de freinage inclinées (16), pouvant être totalement soulevées au-dessus de la surface de transport (12) et, en même temps que cela, les surfaces de freinage (16) du tronçon d'accumulation (A à D, X, Y et Z) en avant dans le direction de transport (F) pour retenir les marchandises pouvant être soulevées en montant dans la direction de transport (F) et en faisant saillie partiellement au-dessus de la surface de transport (12),
caractérisé en ce que le transporteur à accumulation présente un bâti (20) sur lequel s'appuient les éléments d'entraînement (30), et les supports longitudinaux (18) des tronçons d'accumulation (A à D, X, Y et Z) sont maintenus par l'intermédiaire d'un guide (37)/élément angulaire (48) en conservant leur capacité d'inclinaison et de soulèvement dans la direction de levage, et, de ce fait, leur capacité de déplacement dans et à l'encontre de la direction de transfert (F) est limitée, et la liaison articulée (36) est réalisée de sorte que le mouvement angulaire relatif, provoqué par le déplacement de levage des supports longitudinaux (18), des extrémités adjacentes l'une à l'autre (26,28) et la modification de distance liée à cela entre les extrémités (26,28) sont compensés en conservant le transfert des forces de levage.

2. Transporteur à accumulation selon la revendication 1,
caractérisé en ce que la liaison articulée (36) est constituée d'axes (54) s'étendant dans la direction de transport (F) et agencés aux extrémités (26,28) des supports longitudinaux (18), qui pénètrent dans des ouvertures (56) agencées sur les extrémités opposées (26,28) des supports longitudinaux (18).

3. Transporteur à accumulation selon la revendication 1,
caractérisé en ce que la liaison articulée (36) est constituée d'un élément d'appui (47) agencé sur une extrémité (26,28) et faisant saillie dans la direction de transport (F) ainsi que par rapport à l'extrémité opposée (26,28), sur lequel repose le support longitudinal (18) du tronçon d'accumulation adjacent (A à D, X, Y et Z).

4. Transporteur à accumulation selon une des revendications 1 à 3,
caractérisé en ce que plusieurs moyens de transport (14) s'étendant parallèlement et à distance les uns des autres, ainsi qu'entraînés, sont prévus, entre lesquels des surfaces de freinage (16) sont agencées dans chaque tronçon d'accumulation (A à D, X, Y et Z).

5. Transporteur à accumulation selon la revendication 4,
caractérisé en ce que plusieurs supports longitudinaux (18) sont reliés à des surfaces de freinage (16) par l'intermédiaire de traverses (19) et forment un bâti de freinage (15), qui peut être soulevé et abaissé par un élément d'entraînement (30).

6. Transporteur à accumulation selon une des revendications 1 à 5,
caractérisé en ce que les éléments d'entraînement (30) sont entraînés, à chaque fois, par l'intermédiaire d'un vérin pneumatique.

7. Transporteur à accumulation selon une des revendications 1 à 6,
caractérisé en ce que le moyen de transport (14) est réalisé sous forme de courroie.

8. Transporteur à accumulation selon une des revendications 1 à 7,
caractérisé en ce que le moyen de transport sans fin (14) est réalisé sous forme de chaîne, sur laquelle des éléments en caoutchouc sont fixés sur sa surface en regard des marchandises.

9. Transporteur à accumulation selon une des revendications 1 à 8,
caractérisé en ce que les éléments d'entraînement (30) sont généralement formés par un élément engendrant une force (50), réalisée comme vérin de levage, et un levier (52) qui lui est relié de façon articulée, qui peut pivoter autour d'un axe (43) s'étendant transversalement à la direction de transport (F) et de façon généralement horizontale, et sur l'extrémité, opposée à l'élément (50) engendrant une force, duquel est monté un élément entraîneur (44) qui s'engage, pour transférer le mouvement de levage et d'abaissement sur le support longitudinal (18), dans une rainure (46) s'étendant dans la direction de transport (F) et de façon généralement horizontale, qui est agencée sur le dessous du support longitudinal (18).

10. Transporteur à accumulation selon la revendication 9,
caractérisé en ce que, pour chaque tronçon d'accumulation (A à D, X, Y et Z), deux éléments d'entraînement (30) sont prévus qui, écartés à une extrémité (26,28) et transversalement à la direction de transport (F), engagent les supports longitudinaux (18) et desquels uniquement un élément d'entraînement (30) présente un élément (50) engendrant une force, dont le levier (52) est relié, dans le prolongement de l'axe (43), par l'intermédiaire d'un tube de torsion (42), pour l'entraînement, avec le levier (52) opposé de l'autre élément d'entraînement (30).

11. Transporteur à accumulation selon la revendication 10,
caractérisé en ce que, sur le dessous du support longitudinal (18), pour limiter le déplacement du support longitudinal (18) dans et à l'encontre de la direction de transport (F), il est agencé une paire d'éléments angulaires (48) s'étendant vers le bas qui, à chaque fois, reposent tangentiellement sur le tube de torsion (42) ou l'axe (43) dans la direction de transport (F) en avant ou en arrière.

12. Transporteur à accumulation selon une des revendications 1 à 11,
caractérisé en ce que, sur les extrémités adjacentes l'une à l'autre (26,28) des supports longitudinaux (18), sont agencés des éléments (58) du type peigne qui s'engagent l'un dans l'autre dans la direction de transport (F) en conservant un jeu latéral.

13. Transporteur à accumulation selon une des revendications 1 à 12,
caractérisé en ce que, pour chaque tronçon d'accumulation (A à D, X, Y et Z), il est prévu au moins un capteur (32) pour reconnaître les marchandises sur la surface de transport (12) du tronçon d'accumulation respectif (A à D, X, Y et Z), qui sont reliés à un système de commande par l'intermédiaire duquel, de façon présélectionnée, les tronçons d'accumulation (A à D, X, Y et Z) peuvent être commutés, par l'intermédiaire des éléments d'entraînement (30), dans l'état d'accumulation ou dans l'état de passage.
